# EUROPÄISCHE PATENTANMELDUNG

(11) **EP 1 022 091 A2**
(43) Veröffentlichungstag der Anmeldung: **26.07.2000**
(21) Anmeldenummer: 99126092.8
(22) Anmeldetag: 28.12.1999
(51) Int. Cl.: B24B 5/01, B24B 41/00

(54) **Werkzeugmaschine zum Schleifen von Werkstücken**

(30) Priorität: 20.01.1999 DE 19902137
(71) Anmelder: ILG GmbH, 71554 Weissach i.T. (DE)
(72) Erfinder: Ilg, Herbert, 71554 Weissach i.T. (DE)
(74) Vertreter: Manitz, Finsterwald & Partner

(57) **Zusammenfassung**

Werkzeugmaschine zum Schleifen von Werkstücken (15, 35), insbesondere Rundschleifmaschine zum Innen-, Plan- und Außenschleifen von Futterteilen, mit einer Schleifvorrichtung (9, 29) und einer der Schleifvorrichtung (9, 29) zugeordneten Werkstückhaltevorrichtung (4, 24), die gegenüber der Schleifvorrichtung (9, 29) beweglich ist, um das Werkstück (15, 35) mit der Schleifvorrichtung (9, 29) in Bearbeitungseingriff zu bringen, wobei zur Verbesserung der Zugänglichkeit des Arbeitsbereiches der Werkzeugmaschine und zum Fernhalten des Schmutzbereiches vom Arbeitsbereich die Werkzeugmaschine einen Maschinenständer (1, 21) mit einer ersten vertikalen Wand (2, 22) aufweist und daß die Schleifvorrichtung (9, 29) parallel zu dieser Wand (2, 22) in einer ersten Achsrichtung (III, VII) und die Werkstückhaltevorrichtung (4, 24) ebenfalls parallel zu dieser Wand (2, 22) in einer zweiten Achsrichtung (I, V) derart am Maschinenständer (1, 21) verschiebbar geführt sind, daß ein von der Werkstückhaltevorrichtung (4, 24) gehaltenes Werkstück (15, 35) und die Schleifvorrichtung (9, 29) in Bearbeitungseingriff miteinander bringbar sind.

## Beschreibung

Die vorliegende Erfindung betrifft eine Werkzeugmaschine zum Schleifen von Werkstücken, insbesondere Rundschleifmaschine zum Innen-, Plan- und Außenschleifen von Futterteilen, mit einer Schleifvorrichtung und einer der Schleifvorrichtung zugeordneten Werkstückhaltevorrichtung, die gegenüber der Schleifvorrichtung beweglich ist, um das Werkstück mit der Schleifvorrichtung in Bearbeitungseingriff zu bringen.

Bekannte Rundschleifmaschinen für Futterteile weisen ein Maschinenbett auf, auf welchem ein Werkstückspindelstock als Werkstückhaltevorrichtung und ein Schleifspindelstock als Schleifvorrichtung liegend angeordnet sind. Der Werkstückspindelstock ist entweder fest oder um eine zum Maschinenbett senkrechte Achse schwenkbar am Maschinenbett befestigt, während der Schleifspindelstock in zwei Achsen in der Ebene des Maschinenbettes relativ zu diesem beweglich ist, um mit einem von dem Werkstückspindelstock gehaltenen Werkstück in Bearbeitungseingriff treten zu können. Das heißt, der Schleifspindelstock ist in den Achsen X und Z relativ zum Werkstück beweglich, während der Werkstückspindelstock eventuell um eine vertikale Achse B verschwenkbar ist.

Diese bekannten Rundschleifmaschinen sind verhältnismäßig voluminös. Auch der Abtransport der anfallenden Späne und des anfallenden Kühlmittels ist nicht optimal gelöst. Darüber hinaus ist die Beschickung dieser Rundschleifmaschinen umständlich.

Der Erfindung liegt die Aufgabe zugrunde, eine Werkzeugmaschine der eingangs genannten Art so weiterzubilden, daß sie diese Nachteile nicht aufweist. Insbesondere soll die Werkzeugmaschine einen platzsparenderen Aufbau aufweisen, und der Abtransport der Späne und des Kühlmittels soll verbessert werden. Darüber hinaus soll die Beschickung der Werkzeugmaschine vereinfacht werden.

Diese Aufgabe wird dadurch gelöst, daß die Werkzeugmaschine einen Maschinenständer mit einer ersten vertikalen Wand aufweist und daß die Schleifvorrichtung parallel zu dieser Wand in einer ersten Achsrichtung und die Werkstückhaltevorrichtung ebenfalls parallel zu dieser Wand in einer zweiten Achsrichtung derart am Maschinenständer verschiebbar geführt sind, daß ein von der Werkstückhaltevorrichtung gehaltenes Werkstück und die Schleifvorrichtung in Bearbeitungseingriff miteinander bringbar sind.

Durch die Verwendung eines Maschinenständers anstelle eines Maschinenbettes und die erfindungsgemäße Anordnung der Werkstückhaltevorrichtung und der Schleifvorrichtung ergibt sich ein einfacher, platzsparender Aufbau der Werkzeugmaschine. Sowohl die Schleifvorrichtung als auch die Werkstückhaltevorrichtung sind jeweils in einer Achsrichtung beweglich, so daß einfache Schlittenführungen ausreichen und ein voluminöser und aufwendiger Kreuzschlitten entbehrlich ist. Darüber hinaus kann durch die Verwendung eines Maschinenständers die Kühlmittel- und Späneabfuhr verbessert werden, insbesondere kann der Schmutzbereich von der Schleifvorrichtung und dem Werkstück ferngehalten werden.

Auch ist die Beschickung der Werkzeugmaschine, vor allem bei manueller Beschickung, vereinfacht.

Nach einer Ausgestaltung der Erfindung weist der Maschinenständer eine zu der ersten Wand senkrechte zweite Wand auf und ist die Schleifvorrichtung an der einen und die Werkstückhaltevorrichtung an der anderen dieser beiden Wände, insbesondere mittels Schlitten, verschiebbar geführt. Durch die Führung der Werkstückhaltevorrichtung einerseits und der Schleifvorrichtung andererseits an zwei zueinander senkrechten Wänden wird der Aufbau der Werkzeugmaschine besonders kompakt.

Nach einer weiteren Ausgestaltung der Erfindung ist die zweite Wand ebenfalls vertikal orientiert. Durch die Anordnung an zwei vertikalen Wänden sind die Schleifvorrichtung und die Werkstückhaltevorrichtung besonders gut zugänglich. Dabei ist es bevorzugt, wenn die Werkstückhaltevorrichtung an der ersten Wand in einer horizontalen Achsrichtung und die Schleifvorrichtung an der zweiten Wand in einer vertikalen Achsrichtung verschiebbar geführt sind.

Nach einer weiteren Ausgestaltung der Erfindung ist die zweite Wand horizontal orientiert und wird insbesondere durch die Unterseite des Maschinengestells gebildet. Die Baugröße der Werkzeugmaschine wird dadurch vorteilhafterweise weiter verringert. Insbesondere die Breite der Werkzeugmaschine wird hierdurch besonders klein. Dabei ist es bevorzugt, wenn die Werkstückhaltevorrichtung längs der vertikalen Wand in einer vertikalen Achsrichtung und die Schleifvorrichtung längs der horizontalen Wand in einer horizontalen Achsrichtung verschiebbar geführt sind.

Nach einer weiteren Ausgestaltung der Erfindung bildet die erste Wand die Vorderwand der Werkzeugmaschine und ist sowohl die Werkstückhaltevorrichtung als auch die Schleifvorrichtung vor dieser Vorderwand angeordnet. Der Arbeitsbereich ist dadurch besonders gut zugänglich und die Maschine einfach beschickbar.

Sowohl die Werkstückhaltevorrichtung als auch die Schleifvorrichtung sind bevorzugt als Spindeleinheit ausgebildet. Die Werkstückhaltevorrichtung ist zudem bevorzugt um eine zur ersten Wand senkrechte Achse schwenkbar, insbesondere um ± ca. 30° zur Spindelachse.

Nach einer weiteren Ausgestaltung der Erfindung ist die Schleifvorrichtung als Revolver mit zwei oder mehr Werkzeugen ausgebildet. Hierdurch können vorteilhafterweise mit ein und derselben Maschine verschiedene Schleifbearbeitungen durchgeführt werden. Außerdem können an dem Revolver zusätzliche Werkzeuge, wie beispielsweise mindestens ein Stahlhalter zum Hartdrehen der Werkstücke, vorgesehen sein. Die Bearbeitungsmöglichkeiten mit ein und derselben Maschine werden dadurch weiter komplettiert.

Die Drehung des Revolvers kann nach einer weiteren Ausgestaltung der Erfindung mechanisch, insbesondere mit einer 4 x 90°-Teilung erfolgen. Nach einer anderen Ausgestaltung der Erfindung kann der Revolver als CNC-gesteuerter Rundtisch ausgebildet sein.

Ausführungsbeispiele der Erfindung sind in der Zeichnung dargestellt und werden nachfolgend beschrieben. Es zeigen, jeweils in schematischer Darstellung,
- Fig. 1: eine Vorderansicht einer ersten Variante der erfindungsgemäßen Werkzeugmaschine,
- Fig. 2: eine Draufsicht auf die Werkzeugmaschine von Fig. 1,
- Fig. 3: eine Seitenansicht der Werkzeugmaschine von Fig. 1,
- Fig. 4: eine Vorderansicht einer zweiten Variante der erfindungsgemäßen Werkzeugmaschine und
- Fig. 5: eine Seitenansicht der Werkzeugmaschine von Fig. 4.

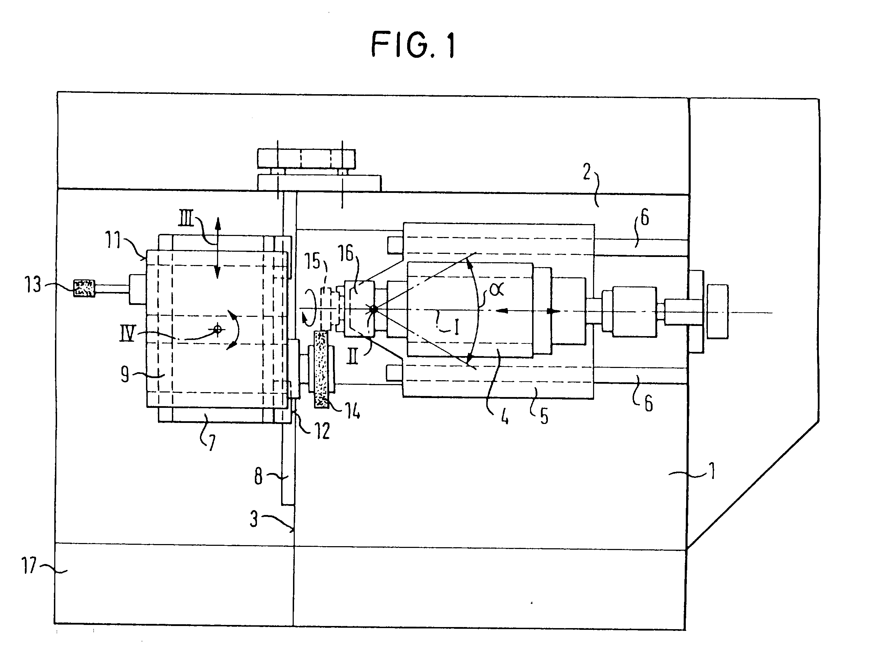

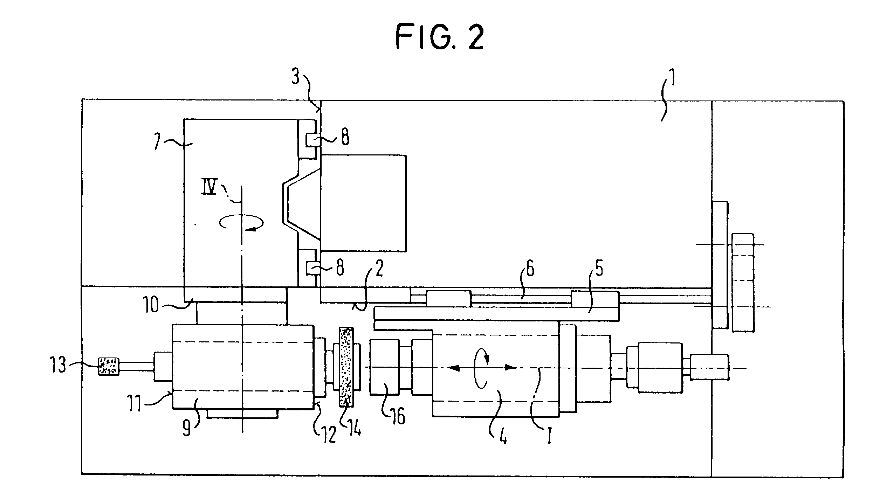

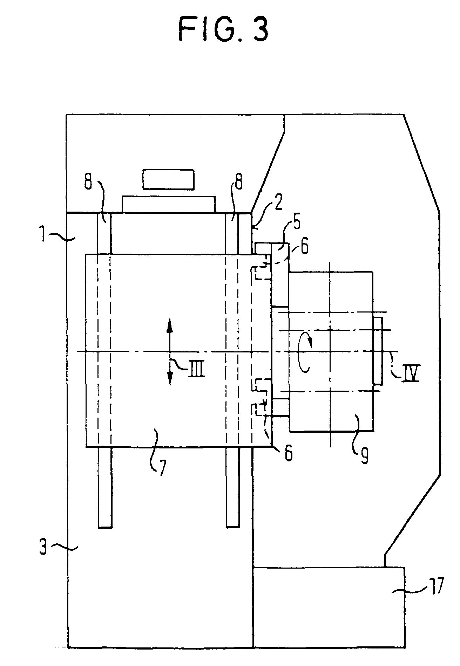

Die in Fig. 1 bis 3 dargestellte erste Variante der erfindungsgemäßen Werkzeugmaschine umfaßt einen Maschinenständer 1 mit einer vertikalen Vorderwand 2 und einer hieran anschließenden, ebenfalls vertikalen Seitenwand 3. Auf der Vorderwand 2 ist ein Werkstückspindelstock 4 mit horizontaler Spindelachse I (C-Achse) angeordnet. Der Werkstückspindelstock 4 ist um eine zur Vorderwand 2 senkrechte Achse II (B-Achse) schwenkbar auf einem Schlitten 5 angeordnet, welcher auf Schienen 6 in Richtung der Spindelachse I, also horizontal, verschiebbar geführt ist (Z-Achse). Der Schwenkwinkel α des Werkzeugspindelstockes 4 um die Achse II beträgt insbesondere ±30° zur Spindelachse I.

An der Seitenwand 3 ist ein weiterer Schlitten 7 auf Schienen 8 in einer vertikalen Achsrichtung III (X-Achse) verschiebbar geführt. Der Schlitten 7 trägt eine Schleifvorrichtung 9, die als Revolver ausgebildet ist. Die Schleifvorrichtung 9 ist auf der in die gleiche Richtung wie die Vorderwand 2 des Maschinenständers 1 weisenden Wand 10 des Schlittens 7 angeordnet und um eine hierzu senkrechte Achse IV (A-Achse) drehbar. Insbesondere weist die Schleifvorrichtung 9 eine mechanische Teilung von 4 x 90° um die Achse IV auf.

Die Schleifvorrichtung 9 weist an zwei voneinander abgewandten und zur Drehachse IV parallelen Wänden 11, 12 eine Innenschleifspindel 13 und eine Außenschleifspindel 14 auf und ist an dem Schlitten 7 so angeordnet, daß die Schleifvorrichtung 9 seitlich vor der Vorderwand 2 des Maschinengestells 1 liegt und die Bearbeitungswerkzeuge 13, 14 mit einem von dem Werkstückspindelstock 4 gehaltenen Werkstück 15 alternativ in Eingriff bringbar sind. Der Werkstückspindelstock weist hierfür eine der Schleifvorrichtung 9 zugewandte Werkstückaufnahme 16 auf. Schließlich ist unterhalb des Werkstückspindelstockes 4 und des Schleifspindelstokkes 9 eine Abführvorrichtung 17 für Kühlmittel und Späne vorgesehen.

Zur Bearbeitung eines Werkstückes 15 wird dieses, manuell oder automatisch, in die Aufnahme 16 des Werkstückspindelstockes 4 eingesetzt. Dann werden der Werkstückspindelstock 4 in Richtung der Z-Achse I und der Schleifspindelstock 9 in Richtung der X-Achse III bewegt, um einen Bearbeitungseingriff zwischen einem Werkzeug 13, 14 und dem Werkstück 15 herzustellen. Zusätzlich kann der Werkstückspindelstock 4 bei Bedarf um die B-Achse II verschwenkt werden. Durch Rotation des Werkzeuges 13, 14 und des Werkstückes 15 um die jeweilige Spindelachse wird das Werkstück 15 in der gewünschten Weise bearbeitet. Nach beendeter Bearbeitung werden der Werkstückspindelstock 4 und der Schleifspindelstock 9 wieder zurückgefahren. Anschließend kann das bearbeitete Werkstück 15 aus der Aufnahme 16 entnommen und ein neues Werkstück dort eingesetzt werden. Durch Rotation des Schleifspindelstockes 9 um die Achse IV kann jeweils ein gewünschtes Werkzeug 13, 14 für die Bearbeitung ausgesucht werden.

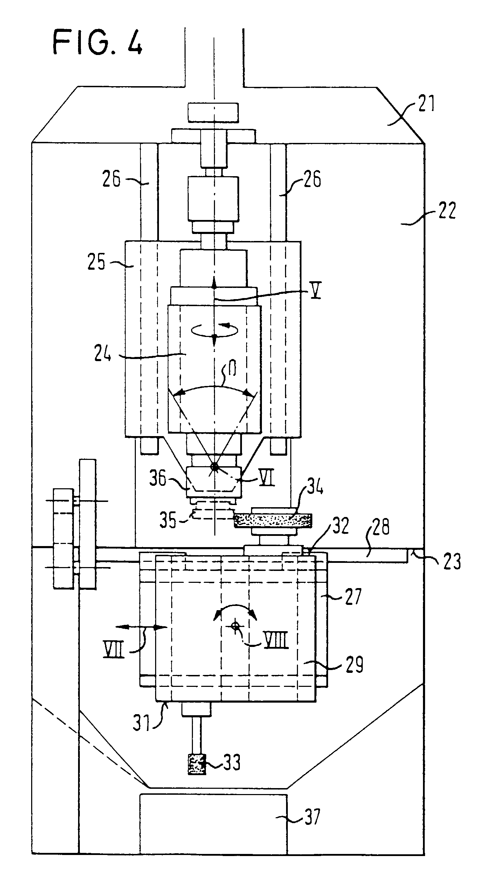

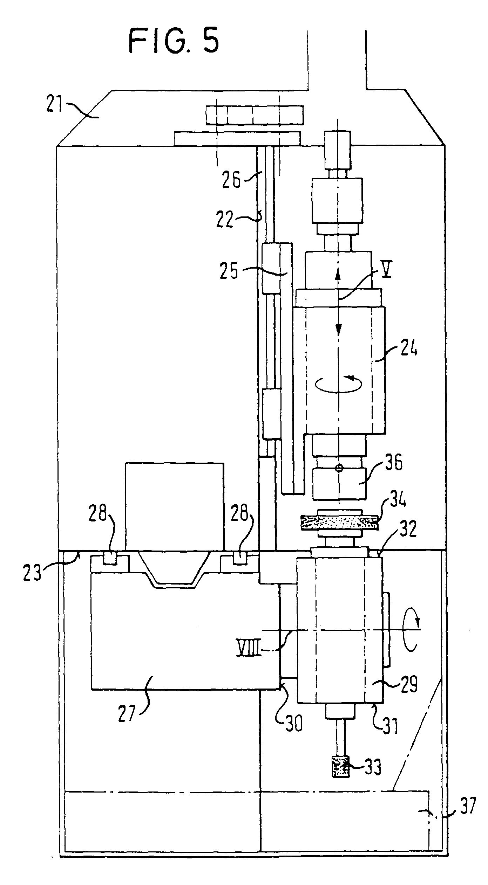

Bei der in den Fig. 4 und 5 dargestellten zweiten Variante der Erfindung weist die Werkzeugmaschine ebenfalls einen Maschinenständer 21 mit einer vertikalen Vorderwand 22 auf. Zudem ist an dem Maschinenständer 1 eine an die Vorderwand 22 anschließende, zum Boden weisende horizontale Wand 23 vorgesehen.

An der Vorderwand 22 des Maschinengestells 21 ist ein Werkstückspindelstock 24 mit vertikaler Spindelachse V (C-Achse) angeordnet. Der Werkstückspindelstock 24 ist auf einem ersten Schlitten 25 angeordnet, der auf Schienen 26 in Richtung der Spindelachse V an der Vorderwand 22 des Maschinengestells 21 verschiebbar geführt ist (Z-Achse). Der Werkstückspindelstock 24 ist auf dem Schlitten 25 um eine zur Vorderwand 22 des Maschinengestells 21 senkrechte Achse VI (B-Achse) um einen Winkel β verschwenkbar, und zwar um ±30° zur Spindelachse V.

An der unteren Wand 23 des Maschinenständers 21 ist ein zweiter Schlitten 27 auf Schienen 28 in einer horizontalen Achsrichtung VII (X-Achse) und parallel zur Vorderwand 22 des Maschinengestells 21 verschiebbar geführt. Der zweite Schlitten 27 trägt einen Schleifspindelstock 29, der als Revolver ausgebildet und um eine zur Vorderwand 22 des Maschinengestells 21 senkrechte Achse VIII (A-Achse) drehbar ist. An zwei voneinander abgewandten und zur A-Achse VIII parallelen Wänden 32 und 33 des Schleifspindelstockes 29 sind eine Innenschleifspindel 33 und eine Außenschleifspindel 34 angeordnet.

Wie man in Fig. 5 sieht, ist der Schleifspindelstock 29 derart an dem zweiten Schlitten 27 angebracht, daß er vor der Vorderwand 22 des Maschinenständers 21 liegt und die Werkzeuge 33 und 34 mit einem von dem Werkstückspindelstock 24 gehaltenen Werkstück 35 in Eingriff treten können. Zur Halterung des Werkstückes 35 ist der Werkstückspindelstock 24 mit einer Aufnahme 36 versehen. Schließlich ist unterhalb des Schleifspindelstockes 29 eine Abführvorrichtung 37 für Späne und Kühlmittel vorgesehen.

Zum Betrieb der zweiten Variante der erfindungsgemäßen Werkzeugmaschine wird ein Werkstück 35 in die Aufnahme 36 des Werkstückspindelstocks 24 eingesetzt. Dann wird der Werkstückspindelstock 24 in Richtung der Z-Achse V und der Schleifspindelstock 29 in Richtung der X-Achse VII bewegt, um eines der Werkzeuge 33, 34 mit dem Werkstück 35 in Bearbeitungseingriff zu bringen. Zusätzlich kann auch hier der Werkstückspindelstock 24 bei Bedarf um die B-Achse VI verschwenkt werden. Nach beendeter Bearbeitung des Werkstückes 35 werden der Werkstückspindelstock 24 und der Schleifspindelstock 29 zurückgefahren und das Werkstück 35 aus der Aufnahme 36 entnommen. Anschließend kann das nächste Werkstück zur Bearbeitung in die Aufnahme 36 eingesetzt werden. Durch Rotation des Schleifspindelstockes 29 um die Achse VIII kann auch hier ein gewünschtes Werkzeug 33, 34 zur Bearbeitung ausgewählt werden.

Wie man sieht, zeichnen sich beide Varianten der erfindungsgemäßen Werkzeugmaschine durch einen einfachen und kompakten Aufbau aus. Der Bearbeitungsbereich der Maschine ist sehr gut zugänglich, so daß die Beschickung der Maschine erleichtert ist. Aber auch die übrigen Teile der erfindungsgemäßen Werkzeugmaschine sind sehr gut zugänglich. Durch die Ständerbauweise kann zudem der Schmutzbereich vom Werkstück 35 und den Werkzeugen 33, 34 ferngehalten werden. Anfallende Späne und Kühlmittel können durch die Vorrichtung 17, 37 unterhalb des Werkstückspindelstockes 4, 24 in einfacher Weise aufgefangen und abtransportiert werden.

### Bezugszeichenliste

- 1, 21: Maschinenständer
- 2, 22: Vorderwand von 1 bzw. 21
- 3: Seitenwand von 1
- 4, 24: Werkstückspindelstock
- 5, 25: erster Schlitten
- 6, 26: Schiene
- 7, 27: zweiter Schlitten
- 8, 28: Schiene
- 9, 29: Schleifspindelstock
- 10, 30: Vorderwand von 7 bzw. 27
- 11, 31: Seitenwand von 9 bzw. 29
- 12, 32: Seitenwand von 9 bzw. 29
- 13, 33: Innenschleifspindel
- 14, 34: Außenschleifspindel
- 15, 35: Werkstück
- 16, 36: Werkstückaufnahme
- 17, 37: Abfuhrvorrichtung
- 23: Unterwand von 21
- I: Spindelachse von 4
- II: Schwenkachse von 4
- III: Bewegungsachse von 9
- IV: Drehachse von 9
- V: Spindelachse von 24
- VI: Schwenkachse von 24
- VII: Bewegungsachse von 29
- VIII: Drehachse von 29
- α: Schwenkwinkel von 4
- β: Schwenkwinkel von 24

## Patentansprüche

1. Werkzeugmaschine zum Schleifen von Werkstücken (15, 35), insbesondere Rundschleifmaschine zum Innen-, Plan- und Außenschleifen von Futterteilen, mit einer Schleifvorrichtung (9, 29) und einer der Schleifvorrichtung (9, 29) zugeordneten Werkstückhaltevorrichtung (4, 24), die gegenüber der Schleifvorrichtung (9, 29) beweglich ist, um das Werkstück (15, 35) mit der Schleifvorrichtung (9, 29) in Bearbeitungseingriff zu bringen,
dadurch gekennzeichnet,
daß die Werkzeugmaschine einen Maschinenständer (1, 21) mit einer ersten vertikalen Wand (2, 22) aufweist und daß die Schleifvorrichtung (9, 29) parallel zu dieser Wand (2, 22) in einer ersten Achsrichtung (III, VII) und die Werkstückhaltevorrichtung (4, 24) ebenfalls parallel zu dieser Wand (2, 22) in einer zweiten Achsrichtung (I, V) derart am Maschinenständer (1, 21) verschiebbar geführt sind, daß ein von der Werkstückhaltevorrichtung (4, 24) gehaltenes Werkstück (15, 35) und die Schleifvorrichtung (9, 29) in Bearbeitungseingriff miteinander bringbar sind.

2. Werkzeugmaschine nach Anspruch 1,
dadurch gekennzeichnet,
daß der Maschinenständer (1, 21) eine an die erste Wand (2, 22) anschließende und zu dieser senkrechte zweite Wand (3, 23) aufweist und daß die Schleifvorrichtung (9, 29) an der einen und die Werkstückhaltevorrichtung (4, 24) an der anderen dieser beiden Wände (2, 22, 3, 23), insbesondere mittels Schlitten (5, 25, 7, 27) verschiebbar geführt sind.

3. Werkzeugmaschine nach Anspruch 2,
dadurch gekennzeichnet,
daß die zweite Wand (3) ebenfalls vertikal orientiert ist.

4. Werkzeugmaschine nach Anspruch 3,
dadurch gekennzeichnet,
daß die Werkstückhaltevorrichtung (4) an der ersten Wand (2) in einer horizontalen Achsrichtung (I) und die Schleifvorrichtung (9) an der zweiten Wand (3) in einer vertikalen Achsrichtung (III) verschiebbar geführt ist.

5. Werkzeugmaschine nach Anspruch 1 oder 2,
dadurch gekennzeichnet,
daß die zweite Wand (23) horizontal orientiert ist und insbesondere zur Aufstellfläche der Werkzeugmaschine weist.

6. Werkzeugmaschine nach Anspruch 5,
dadurch gekennzeichnet,
daß die Werkstückhaltevorrichtung (24) längs der vertikalen Wand (22) in einer vertikalen Achsrichtung (V) und die Schleifvorrichtung (29) längs der horizontalen Wand (23) in einer horizontalen Achsrichtung (VII) verschiebbar geführt ist.

7. Werkzeugmaschine nach einem der vorhergehenden Ansprüche,
dadurch gekennzeichnet,
daß die erste Wand (2, 22) die Vorderwand des Maschinenständers (1, 21) bildet und daß die Werkstückhaltevorrichtung (4, 24) und die Schleifvorrichtung (9, 29) vor der ersten Wand (2, 22) angeordnet sind.

8. Werkzeugmaschine nach einem der vorhergehenden Ansprüche,
dadurch gekennzeichnet,
daß die Werkstückhaltevorrichtung (4, 24) als Spindeleinheit ausgebildet ist.

9. Werkzeugmaschine nach einem der vorhergehenden Ansprüche,
dadurch gekennzeichnet,
daß die Schleifvorrichtung (9, 29) als Spindeleinheit ausgebildet ist.

10. Werkzeugmaschine nach einem der vorhergehenden Ansprüche,
dadurch gekennzeichnet,
daß die Werkstückhaltevorrichtung (4, 24) um eine zur ersten Wand (2, 22) senkrechte Achse (II, VI), insbesondere um ca. ±30° zur Spindelachse (I, V), schwenkbar ist.

11. Werkzeugmaschine nach einem der vorhergehenden Ansprüche,
dadurch gekennzeichnet,
daß die Schleifvorrichtung (9, 29) als Revolver mit zwei oder mehr Werkzeugen (13, 14, 33, 34) ausgebildet ist.

12. Werkzeugmaschine nach Anspruch 11,
dadurch gekennzeichnet,
daß die Schleifvorrichtung (9, 29) eine mechanische Teilung, insbesondere von 4 x 90° aufweist.

13. Werkzeugmaschine nach Anspruch 11,
dadurch gekennzeichnet,
daß die Schleifvorrichtung (9, 29) als CNC-gesteuerter Rundtisch ausgebildet ist.

14. Werkzeugmaschine nach einem der Ansprüche 11 bis 13,
dadurch gekennzeichnet,
daß die Schleifvorrichtung mit mindestens einem Stahlhalter zum Hartdrehen von Werkstücken (15, 35) versehen ist.
